(19) Europäisches Patentamt
European Patent Office
Office européen des brevets

(11) **EP 3 844 385 B1**

(12) **EUROPÄISCHE PATENTSCHRIFT**

(45) Veröffentlichungstag und Bekanntmachung des Hinweises auf die Patenterteilung:
**11.10.2023   Patentblatt 2023/41**

(21) Anmeldenummer: **19765198.7**

(22) Anmeldetag: **30.08.2019**

(51) Internationale Patentklassifikation (IPC):
**F03D 1/06** (2006.01)

(52) Gemeinsame Patentklassifikation (CPC):
**F03D 1/0633;** F05B 2260/96; Y02E 10/72

(86) Internationale Anmeldenummer:
**PCT/EP2019/073184**

(87) Internationale Veröffentlichungsnummer:
**WO 2020/043870 (05.03.2020 Gazette 2020/10)**

(54) **ROTORBLATT FÜR EINE WINDENERGIEANLAGE UND WINDENERGIEANLAGE**

ROTOR BLADE FOR A WIND TURBINE AND WIND TURBINE

PALE DE ROTOR POUR AÉROGÉNÉRATEUR ET AÉROGÉNÉRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2018   DE 102018121249**

(43) Veröffentlichungstag der Anmeldung:
**07.07.2021   Patentblatt 2021/27**

(73) Patentinhaber: **Wobben Properties GmbH**
**26607 Aurich (DE)**

(72) Erfinder:
• **NAPIERALA, Christian Frank**
**deseased (DE)**

• **STEMBERG, Jochen**
**26607 Aurich (DE)**
• **BEKIROPOULOS, Dimitrios**
**26603 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
WO-A1-2015/192915       WO-A1-2015/195327
DE-A1- 10 340 978       DE-A1-102005 019 905
DE-A1-102016 201 114    DE-B4- 10 340 978
DE-B4-102005 019 905

**Beschreibung**

Die vorliegende Erfindung betrifft ein Rotorblatt für eine Windenergieanlage, eine zugehörige Windenergieanlage und einen zugehörigen Windpark sowie ein Verfahren zur Lärmreduzierung einer Windenergieanlage.

Es ist bekannt, dass Rotorblätter von Windenergieanlagen im Betrieb wesentlich zu der Erzeugung von Lärm beitragen. Besonderen Einfluss auf die Geräuscherzeugung aerodynamischer Profile beispielsweise von Rotorblättern haben die Eigenschaften der Grenzschicht, insbesondere im Bereich der Hinterkante.

Verschiedene Methoden zur Verringerung des erzeugten Lärmes, insbesondere im Bereich der Hinterkante, sind bekannt. Diese umfassen die Anbringung von sogenannten Serrations, die im Wesentlichen dafür sorgen, dass die Frequenz des erzeugten Lärmes sich hin zu höheren Frequenzen verlagert, die eine höhere Absorption bzw. Abnahme durch die umgebende Luft erfahren, so dass der in einer bestimmten Umgebung von der Windenergieanlage messbare Lärm verringert wird.

Eine wesentliche Geräuschquelle entsteht aber an Hinterkanten dann, wenn sich die Grenzschicht in diesem Bereich ablöst. Bekannt sind, beispielsweise aus Afshari et al.: "Trailing Edge Noise Reduction Using Novel Surface Treatments". 22nd AIAA/CEAS Aeroacoustic Conference, Lyon, 2016, Geometrien, die im Bereich der Hinterkante angebracht werden und Eigenschaften der Grenzschicht verändern können. Diese Geometrien erfordern aber aufwändige und individuelle Ausgestaltung, die großtechnisch schwer herstellbar und jedenfalls kompliziert zu reparieren sind.

Das Deutsche Patent- und Markenamt hat in der Prioritätsanmeldung zu vorliegender Anmeldung folgenden Stand der Technik recherchiert: DE 103 40 978 A1, DE 10 2005 019 905 A1, DE 10 2007 046 253 A1, DE 10 2016 201 114 A1, US 8899923 B2, US 2018/0209398 A1, WO 2015/192 915 A1.

Vor diesem Hintergrund war es eine Aufgabe der vorliegenden Erfindung, die Schallemission an Windenergieanlagenrotorblättern zu verringern. Zusätzlich war es eine Aufgabe der vorliegenden Erfindung, nach Möglichkeit den maximalen Auftrieb des Windenergieanlagenrotorblattes zu erhöhen. Jedenfalls war es eine Aufgabe, eine kostengünstigere und einfacher zu wartende Alternative zu bekannten Windenergieanlagenrotorblättern anzugeben.

Erfindungsgemäß wird die Aufgabe zunächst durch ein Rotorblatt, insbesondere für eine Windenergieanlage, gelöst. Das Rotorblatt umfasst einen Innenblattabschnitt, der sich von einer Rotorblattwurzel in Längsrichtung des Rotorblattes erstreckt und einen an den Innenblattabschnitt anschließenden Außenblattabschnitt, der sich in Längsrichtung bis zu einer Rotorblattspitze erstreckt. Das Rotorblatt weist eine druckseitige Fläche und eine saugseitige Fläche auf, die durch eine Vorderkante und eine Hinterkante voneinander getrennt sind. Auf der Oberfläche des Rotorblattes ist ein Klettband angeordnet, das sich im Wesentlichen entlang der Längsrichtung des Rotorblattes erstreckt.

Das erfindungsgemäß zum Einsatz kommende Klettband stellt ein Beispiel eines porösen Körpers dar, der zum einen dazu geeignet ist, die Schallemissionen zu verringern und gleichzeitig durch die Verzögerung der Ablösung der Strömung dazu beiträgt, den maximalen Auftrieb zu verbessern. Dadurch kann gleichzeitig die Häufigkeit und Stärke von Ablöselärm, also Lärm der bei einem Ablösen der Grenzschicht von dem Rotorblatt entsteht, verringert werden.

Die Erfinder der vorliegenden Erfindung haben erkannt, dass es sich bei einem Klettband, wie es bekanntermaßen für einen völlig anderen Zweck erwerbbar ist, um einen porösen Körper handelt, der die gewünschten Eigenschaften hinsichtlich Geräuschentwicklung zeigt. Während das Klettband im herkömmlichen Einsatz mit einer Gegenseite in haftendem oder verbindendem Kontakt gehalten wird, so wird im Rahmen der vorliegenden Erfindung nur eine der beiden Seiten eingesetzt, während das fehlende Gegenstück sozusagen den für die Porosität benötigten Freiraum ermöglicht.

Das Klettband eignet sich darüber hinaus besonders deshalb für den Einsatz an Rotorblättern, da es standardmäßig bereits in Streifenform hergestellt wird. Die Streifenform entspricht zumindest näherungsweise der Längsrichtung des Rotorblattes, so dass das Klettband besonders einfach entlang der Längsrichtung des Rotorblattes anbringbar ist.

Das Klettband weist vorzugsweise wenigstens eines aus der nachfolgenden Liste ausgewählte Band auf: ein Flauschband, ein Hakenband, ein Pilzkopfband und/oder ein Veloursband auf.

In dieser Ausführungsform erstreckt sich das Klettband im Wesentlichen entlang der Längsrichtung des Rotorblattes, das heißt einer Richtung, die auf einer Profilsehnenrichtung im Wesentlichen senkrecht steht. Die Längsrichtung des Rotorblattes wird beispielsweise zwischen Rotorblattwurzel und Rotorblattspitze definiert, wobei als Längsrichtung sämtliche Richtungen bezeichnet werden, die parallel zu dieser Erstreckungsrichtung sind.

Beispielsweise kann das Klettband in der Nähe zu und parallel zu der Vorderkante und/oder der Hinterkante des Rotorblattes oder auch an einer anderen Stelle der Oberfläche angeordnet sein.

Im Folgenden wird mit einer Erstreckung des Klettbandes im Wesentlichen entlang der Längsrichtung des Rotorblattes eine Abweichung der Erstreckungsrichtung des Klettbandes von der Längsrichtung des Rotorblattes um höchstens 10°, vorzugsweise um höchstens 5°, bezeichnet. Demnach kann das Klettband auch parallel zu einem Verlauf der Hinterkante angeordnet sein, das im Zusammenhang mit dieser Offenbarung als im Wesentlichen in Längsrichtung des Rotorblattes zu verstehen ist.

Gemäß einer bevorzugten Ausführung ist das Klettband in einem Bereich der Hinterkante des Rotorblattes angeordnet, wobei der Bereich der Hinterkante einen Bereich ab 70 % Profiltiefe, insbesondere ab 80 % Profiltiefe, bevorzugt ab 90 % Profiltiefe und besonders bevorzugt ab 95 % Profiltiefe umfasst. Im Bereich der Hinterkante kann das Klettband die besonders vorteilhafte Wirkung zur Lärmreduktion und/oder Auftriebssteigerung entfalten, da in diesem Bereich eine Ablösung der Strömung einsetzt bzw. Lärm entsteht.

Gemäß einer bevorzugten Ausführung ist das Klettband auf der saugseitigen und/oder der druckseitigen Fläche des Rotorblattes angeordnet. Aufgrund der höheren

Strömungsgeschwindigkeiten auf der Saugseite entfaltet das Klettband hier eine besonders vorteilhafte Wirkung. Zusätzlich oder alternativ kann ein auf der Druckseite angeordnetes Klettband eine Wirkung ähnlich einer Hinterkantenklappe, beispielsweise einer Gurney Flap, ohne die bekannten akustischen Nachteile einer stumpfen Hinterkante, entfalten.

Gemäß einer bevorzugten Ausführung erstreckt sich das Klettband auf dem Rotorblatt in einem Bereich von etwa 92 % bis 98 % der Profiltiefe in Längsrichtung des Rotorblattes. In diesem Bereich, von etwa 92 % bis 98 % der Profiltiefe in Längsrichtung, ist der Bereich, bei dem mit höchster Wahrscheinlichkeit Strömungsablösungen zu erwarten sind. Demnach ist eine Anordnung in diesem Bereich, besonders vorteilhaft für die Eigenschaften des Rotorblattes. Vorzugsweise ragt das Klettband nicht über den Bereich von 92 % bis 98 % in Profiltiefenrichtung hinaus, wobei nicht gefordert ist, dass sich das Klettband über den gesamten Bereich erstreckt. Unter dem Begriff etwa ist hier insbesondere eine mathematische Rundung auf die nächsthöhere bzw. niedrigere ganzzahlige Prozentzahl zu verstehen.

Gemäß einer bevorzugten Ausführung ist das in Strömungsrichtung vordere Ende des Klettbands auf dem Rotorblatt zwischen 90% und 98 % Profiltiefe, insbesondere bei etwa 95 % Profiltiefe angeordnet.

Die Ausdehnung und Anordnung des Klettbandes auf dem Rotorblatt ist natürlich nicht beschränkt und kann gemäß den Anforderungen der Rotorblattgeometrie geeignet gewählt und optimiert werden.

Erfindungsgemäß ist die Hinterkante als stumpfe Hinterkante ausgebildet. In Verbindung mit einer stumpfen Hinterkante ist es durch ein Klettband, das bevorzugt im Bereich der stumpfen Hinterkante angeordnet ist, möglich, die Strömungsablösung zu verzögern und damit den Auftrieb effektiv zu steigern. Eine Hinterkante wird vorzugsweise dann als stumpf bezeichnet, wenn die Druck- und Saugseite, die durch die Hinterkante verbunden sind, im Bereich der Hinterkante um wenigstens 1 cm getrennt sind. Damit ist es möglich, die geografische Tiefe des Blattes, beispielsweise zu Transportzwecken, zu verkürzen.

Gemäß einer bevorzugten Ausführung ist das Klettband in einem Blattwurzelbereich und/oder einem Blattspitzenbereich angeordnet.

In einem Blattwurzelbereich, der vorzugsweise als die 30 % der Rotorblattlänge definiert ist, die sich an die Blattwurzel angrenzend, erzeugt das Klettband eine Auftriebserhöhung durch eine Verzögerung des Strömungsabrisses. Besonders vorteilhaft lässt sich das Klettband hier mit einer stumpfen Hinterkante kombinieren.

In einem Blattspitzenbereich, der vorzugsweise als die äußeren 30 % der Rotorblattlänge definiert ist, die sich außen bis zur Blattspitze erstrecken, erzeugt das Klettband eine Lärmreduktion durch seine Eigenschaften als poröser Körper.

Erfindungsgemäß beträgt die Erstreckung des Klettbandes in Längsrichtung des Rotorblattes mindestens 1 m.

Gemäß einer bevorzugten Ausführung weist das Rotorblatt ein oder mehrere aerodynamische Anbauteile, insbesondere Splitter-Plates, Trailing-Edge Serrations, Vortexgeneratoren und Klappen aufweist.

Gemäß einer bevorzugten Ausführung ist das Klettband an den oder in der Nähe der aerodynamischen Anbauteile angeordnet ist. Besonders im Bereich der Anbauteile kann der Strömungsabriss wirksam verzögert bzw. der entstehende Lärm wirksam vermindert werden, indem in dem Bereich des oder der Anbauteile das Klettband angeordnet wird.

Erfindungsgemäß ist das Klettband mehrteilig aus Abschnitten mit jeweils 1 m oder 2,5 m Länge ausgebildet. Diese Abschnitte bestimmter Länge entsprechen gerade den Längen, die besonders einfach verfügbar sind und sich demnach für Wartungsanforderungen besonders eignen. Natürlich ist auch eine Verbindung der Abschnitte zu einem einzigen gesamten Klettband möglich.

Erfindungsgemäß weist das Klettband in Profiltiefenrichtung eine Breite von etwa 20 mm oder etwa 50 mm auf. Die beiden Breiten können auch abschnittsweise kombiniert werden. Diese Werte, insbesondere 20 mm, haben sich für im Bereich von Windenergieanlagen zu erwartende Profiltiefen als besonders geschickt herausgestellt, um einen Kompromiss zwischen größtmöglicher Auftriebssteigerung, minimaler Widerstandserhöhung und gleichzeitig Geräuschreduktion zu erreichen. Je nach Form des Klettbandes, beispielsweise der Höhe und/oder der Ausgestaltung der klettenden Struktur, sind auch dünnere oder breitere Breiten besonders effektiv.

Gemäß einer bevorzugten Ausführung weist das Klettband entlang einer Vertikalen zur Ebene des Rotorblattes, die durch die Längsrichtung des Rotorblattes und die Profiltiefenrichtung gebildet wird, eine mit der Profiltiefe und/oder der Dicke der Grenzschicht an der Position in Längsrichtung skalierende Höhe aufweist. Vorzugsweise beträgt die Höhe zwischen 1 mm und 50 mm.

Vorzugsweise weist das Klettband im Innenbereich eine größere Höhe bzw. Dicke als an der Blattspitze auf.

Besonders bevorzugt skaliert alternativ oder zusätzlich auch die Breite des Klettbandes mit der Profiltiefe und/oder der Dicke der Grenzschicht, so dass das Klettband vorzugsweise im Innenbereich eine größere Breite als an der Blattspitze aufweist.

Gemäß einer bevorzugten Ausführung umfasst das Klettband eine Klebebeschichtung. Mittels der Klebebeschichtung, beispielsweise in Form eines doppelseitigen Klebebandes, wird das Klettband sicher an der Oberfläche des Rotorblattes befestigt. Gleichzeitig ermöglicht die Klebebeschichtung in dem Fall eines Ablösens des Klettbandes einen einfachen Ersatz des Klettbandes, ohne dass ein Schaden an dem Rotorblatt entsteht.

Die Aufgabe wird erfindungsgemäß ferner durch eine Windenergieanlage mit einem Turm, einer Gondel und einem Rotor gelöst. Der Rotor umfasst zumindest ein erfindungsgemäßes Rotorblatt oder eine als bevorzugt beschriebene Ausführung des erfindungsgemäßen Rotorblattes. Die erfindungsgemäße Windenergieanlage ermöglicht somit auf gleiche Weise, die Vorteile des erfindungsgemäßen Rotorblattes bezogen auf die Lärmerzeugung und/oder den erzeugten Auftrieb zu übernehmen. Vorzugsweise sind sämtliche der Rotorblätter des Rotors der erfindungsgemäßen Windenergieanlage gemäß einer der oben beschriebenen Ausführungen ausgestaltet.

Die Aufgabe wird ferner durch einen Windpark mit zumindest zwei Windenergieanlagen gemäß der Erfindung gelöst.

Die Aufgabe wird gemäß einem weiteren Aspekt durch ein Verfahren zur Optimierung, insbesondere zur Lärmreduzierung und/oder zur Auftriebssteigerung, einer Windenergieanlage gemäß Anspruch 12 gelöst.

Je nach aerodynamischem Profil umfasst das Verfahren vorzugsweise weiter ein Bestimmen der Position und Ausmaße des Klettbandes und daran anschließend insbesondere ein Auswählen eines geeigneten Klettbandes aus den fachmännisch verfügbaren Varianten.

Auch auf das erfindungsgemäße Verfahren können analog zu dem erfindungsgemäßen Rotorblatt die besonderen vorteilhaften Ausgestaltungen übertragen werden.

In einer bevorzugten Ausführung des Verfahrens erfolgt das Anbringen des Klettbandes auf der saugseitigen Fläche des Rotorblattes bei etwa 95% Profiltiefe im Wesentlichen in Längsrichtung des Rotorblattes. Dieser Bereich, der insbesondere den Bereich von 85% bis 100% Profiltiefe umfasst, wobei gemeint ist, dass sich die Mitte des Klettbandes innerhalb dieses Bereiches befindet, hat sich als besonders geeignet herausgestellt, um die Eigenschaften der Grenzschicht an der Hinterkante positiv zu beeinflussen.

In einer bevorzugten Ausführung des Verfahrens wird die Ausdehnung und Position des Klettbandes unter Berücksichtigung der Rotorblattgeometrie optimiert. Zur Optimierung wird vorzugsweise die Lärmentstehung oder die Auftriebswerte herangezogen, wobei die Anordnung des Klettbandes zur Optimierung der Lärmentstehung vorzugsweise im Blattspitzenbereich und zur Optimierung der Auftriebswerte vorzugsweise im Blattwurzelbereich erfolgt.

Weitere Vorteile und Ausgestaltungen werden im Folgenden mit Verweis auf die beigefügten Figuren beschrieben. Hierbei zeigen:

Fig. 1 schematisch und exemplarisch eine Windenergieanlage,
Fig. 2 schematisch und exemplarisch ein Rotorblatt,
Fig. 3a schematisch und exemplarisch einen Profilschnitt des Rotorblattes aus Fig. 2,
Fig. 3b schematisch und exemplarisch eine Detailansicht des Profilschnittes aus Fig. 3a
Fig. 4 schematisch und exemplarisch ein Klettband in einem Hinterkantenbereich in Detailansicht,
Fig. 5 schematisch und exemplarisch die akustische Auswirkung des erfindungsgemäßen Rotorblattes,
Fig. 6 schematisch und exemplarisch die akustische Auswirkung des erfindungsgemäßen Rotorblattes,
Fig. 7 schematisch und exemplarisch die akustische Auswirkung des erfindungsgemäßen Rotorblattes,
Fig. 8 schematisch und exemplarisch die Auswirkung auf den Auftrieb des erfindungsgemäßen Rotorblattes,
Fig. 9 schematisch und exemplarisch ein Rotorblatt mit Anbauteilen und
Fig. 10 schematisch und exemplarisch ein Flussdiagramm eines Verfahrens.

Es ist zu beachten, dass gleiche Bezugszeichen eventuell ähnliche, nicht identische Elemente auch unterschiedlicher Ausführungsformen bezeichnen können.

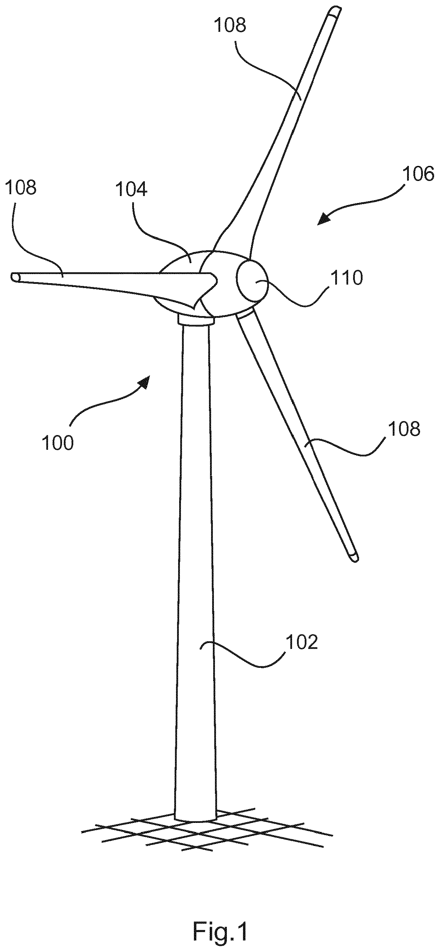

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, so dass das vorgesehene Klettband an dem Rotorblatt nicht eindeutig erkennbar ist.

Figur 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an. Der Pitch der drei Rotorblätter ist z.B. jeweils durch einen Pitchantrieb einstellbar.

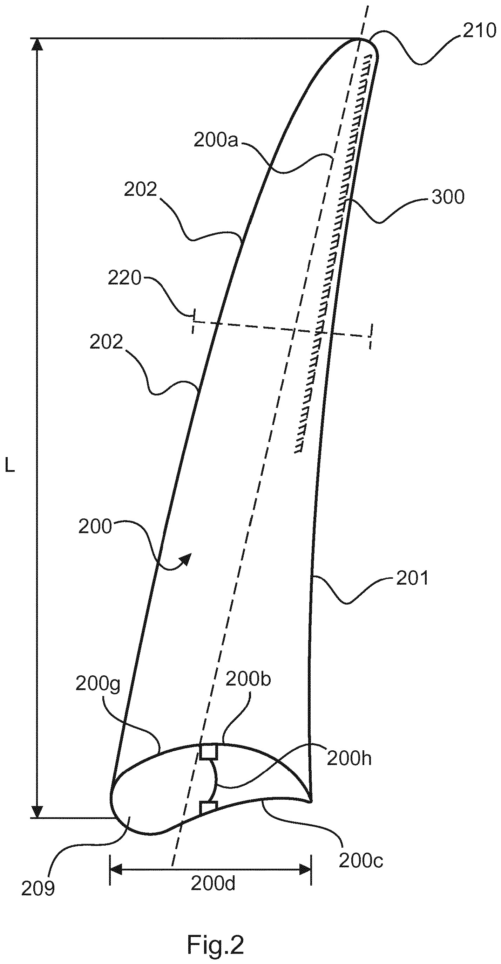

Figur 2 zeigt schematisch ein Windenergieanlagen-Rotorblatt 200 gemäß einem ersten Ausführungsbeispiel mit einer Rotorblatthinterkante 201, die vereinfachend auch als Hinterkante bezeichnet wird. Das Rotorblatt 200 weist eine Rotorblattwurzel 209 und eine Rotorblattspitze 210 auf. Die Länge zwischen der Rotorblattspitze 210 und der Rotorblattwurzel 209 wird als Rotorblattlänge L bezeichnet. Das Rotorblatt 200 weist eine Pitch-Drehachse 200a auf.

Die Pitch-Drehachse 200a ist die Drehachse des Rotorblattes, wenn der Blattwinkel bzw. Pitch des Rotorblattes verstellt wird.

Das Rotorblatt 200 weist ferner eine Saugseite 200b, eine Druckseite 200c, und eine Vorderkante 202 auf. Das Rotorblatt 200 weist eine Profiltiefe 200d auf, welche entlang der Länge L des Rotorblattes (zur Rotorblattspitze hin) im Regelfall konstant bleibt oder monoton abnimmt.

Das Rotorblatt 200 weist eine Außenschale 200g unter anderem mit einem Faserverbundwerkstoff, wie z.B. GFK (Glasfaser verstärkter Kunststoff) oder CFK (Kohlenfaser verstärkter Kunststoff) auf. Zusätzlich können Stege 200h zwischen der Saugseite und der Druckseite vorgesehen sein.

Die Hinterkante 201 ist (entlang der Länge L des Rotorblattes) nicht gerade, sondern weist eine Mehrzahl von Abschnitten auf, welche unterschiedlich zur Pitch-Drehachse 200a ausgerichtet sein können.

In diesem Beispiel weist das Rotorblatt 200 auf seiner saugseitigen Fläche 200b einen porösen Körper auf, der in Form eines Klettbandes 300 im Bereich der Hinterkante 201 angeordnet ist. Die Anordnung des Klettbandes 300 im Bereich der Hinterkante 201 ist beispielhaft und in diesem Beispiel in einem Außenblattabschnitt, das heißt im Bereich bzw. in der Nähe der Rotorblattspitze 201, gezeigt. In anderen Beispielen kann das Klettband 300 bzw. auch ein anderer poröser Körper auch an anderen Stellen des Rotorblattes, beispielsweise auch auf der Druckseite 200c, angeordnet werden.

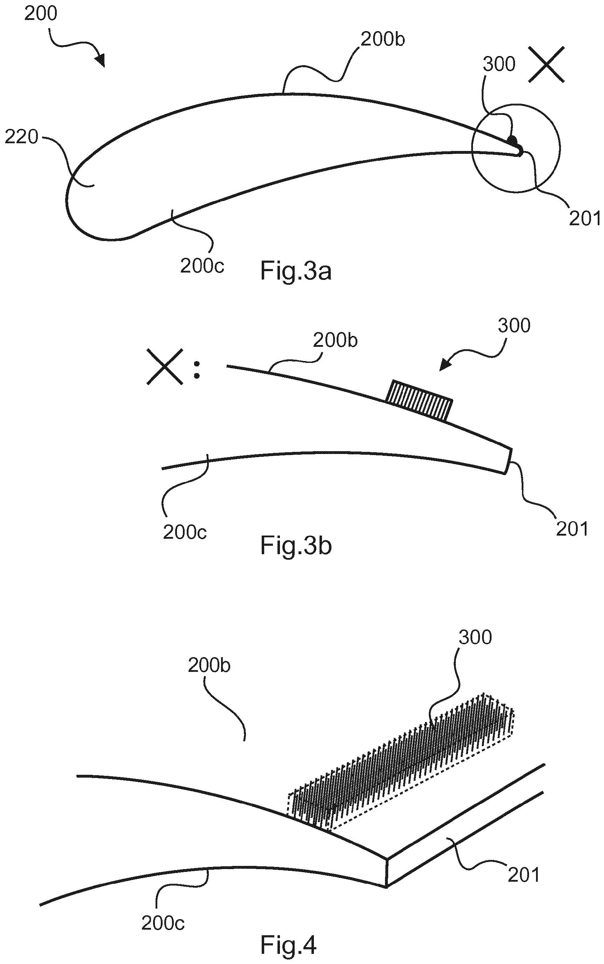

Die in Figur 2 gezeigte Anordnung des Klettbandes 300 wird im Detail in den Figuren 3a und 3b nachfolgend beschrieben, die einen Querschnitt des Profils des Rotorblattes 200 an einer Stelle 220, das heißt in dem Bereich, in dem das Klettband 300 angeordnet ist, zeigen.

Figur 3a zeigt das komplette Profil des Rotorblattes 200 an der Stelle 220 in Längsrichtung, während Figur 3b einen mit X gekennzeichneten Ausschnitt im Bereich der Hinterkante 201, in dem das Klettband 300 angeordnet ist, im Detail zeigt. Eine Dicke der Hinterkante 210 ist in diesem Beispiel etwa der Höhe des Klettbandes 300 entsprechend.

Die Eigenschaften der Grenzschicht beim Passieren der Hinterkante 201 sind maßgeblich für die Quellstärke des Hinterkantenlärms. Demnach betrifft das Klettband 300 eine Modifikation der hinterkantennahen Grenzschichtströmung, was im Ergebnis zu einer Reduktion des Hinterkantenlärms führt.

Der Bereich der Hinterkante umfasst vorzugsweise einen Bereich ab 70 % in Profiltiefenrichtung, das heißt der Profiltiefe, die sich ausgehend von der Vorderkante 202 zu der Hinterkante 201 erstreckt. Besonders bevorzugt ist das Klettband 300 ab etwa 95 % Profiltiefe angeordnet, das heißt, der in Strömungsrichtung vordere Teil des Klettbandes 300 befindet sich im Bereich von 95 % Profiltiefe. In anderen Ausführungen, insbesondere anderen Profilgeometrien, sind natürlich auch andere Anordnungen des Klettbandes 300 sinnvoll einsetzbar.

Figur 4 zeigt schematisch und perspektivisch eine weitere Ansicht des Bereiches der Hinterkante 201, auf dem das Klettband 300 angebracht ist. In den Beispielen ist die Hinterkante 201 vergleichsweise dünn ausgestaltet, das heißt, befindet sich in der gleichen Größenordnung wie die Dicke des Klettbandes 300. In anderen Ausführungen kann das Klettband 300 auch im Bereich einer dicken bzw. stumpfen Hinterkante 201 angeordnet werden, wobei sich diese im Regelfall in einem wurzelnahen Bereich, das heißt in einem Blattinnenbereich in der Nähe der Rotorblattwurzel 209, befindet. In diesem Bereich sind dicke Hinterkanten besonders aus Logistikgründen verbreitet. Im Innenbereich hat das Klettband 300 eine andere Wirkung, es wirkt dann auftriebsfördernd dadurch, dass es eine Ablösung der Strömung verzögert.

Bei dem Klettband 300 handelt es sich um handelsübliches Klettband mit vorzugsweise Klebebeschichtung, dass beispielsweise eine Breite von 20 mm und Abschnitte in 1 m oder 2,5 m Länge aufweist. Auch andere bekannte Klettbänder sind natürlich einsetzbar.

Die Wirksamkeit der Lärmreduzierung durch das Klettband 300 wurde im Windkanal unter Verwendung der Fernfeld-Relation von Blake abgeschätzt. Aus in der Hinterkante 201 eingebrachten Wanddruckfluktuationssensoren, die beispielsweise von der Firma Kulite erhältlich sind, kann der Lärm an der Hinterkante 201 abgeschätzt werden. Alternativ ist zum Nachweis der Wirksamkeit natürlich auch eine Fernfeld-Lärmmessung möglich, wenn es sich bei der Messstrecke nicht um eine geschlossene Messstrecke handelt.

Das Klettband kann prinzipiell auf dem gesamten Rotorblatt angebracht werden. Vorteilhaft an der Blattspitze ist die akustische Wirkung des Klettbands. Im Innenbereich ist vor allem die auftriebssteigernde Wirkung in der Profilpolare relevant. Die Wirkung des Klettbands in Kombination mit Flatback-Profilen muss noch untersucht werden. Die Kombination mit anderen aerodynamischen Anbauteilen wie Splitter-Plates, Trailing-Edge Serrations, Vortexgeneratoren und Gurney Flaps ist denkbar und muss untersucht werden. Insbesondere bei Klappen kann die stall-verzögernde Wirkung des Klettbands signifikante Vorteile mit sich bringen.

Die Fernfeldrelation von Blake, die zur Abschätzung des Hinterkantenlärms herangezogen wird, ist beispielsweise in HERRIG, A.: "Validation and Application of a Hot-Wire based Method for Trailing-Edge Noise Measurements on Airfoils". S. 132, Dissertation, 1. Auflage, Verlag Dr. Huth, München, 2012, beschrieben:

$$G_{p,ff}(\omega, r) \approx \frac{L_{ref}}{8\pi^2 r^2} Ma_c(\omega) \Lambda_{p,3}(\omega) G_{pp}(\omega)$$

Das Wanddruckfluktuationsspektrum $G_{pp}$ kann direkt gemessen werden. Unter der Voraussetzung eines exponentiellen Kohärenzabfalls der Wanddruckfluktuationen kann die spanweitige Kohärenz-Länge $\Lambda_{p,3}$ durch die Kohärenz zweier Wanddruckfluktuationssensoren $\gamma_3$ abgeschätzt werden, die in einem spanweitigen Abstand $\Delta z$ in die Prüflingsoberfläche eingebracht sind:

$$\Lambda_{p,3}(\omega) \approx -\frac{\Delta z}{\ln(\gamma_3)}$$

Die frequenzabhängige konvektive Machzahl $M_{ac}$ kann unter Annahme der Taylorhypothese durch die Phasendifferenz der Fouriertransformierten zweier Wanddruckfluktuationssensoren $\varphi(\omega)$ bestimmt werden, die in einem stromweitigen Abstand $\Delta x$. in die Prüflingsoberfläche eingebracht sind. c ist die Schallgeschwindigkeit:

$$Ma_c(\omega) = \frac{\omega \Delta x}{\varphi(\omega) c}$$

Diese Abschätzung ist nötig, da, wie beschrieben, im Windkanal aufgrund der geschlossenen Messstrecke keine Fernfeld-Lärmmessung möglich ist.

Stattdessen werden wie beschrieben auf Saug- und Druckseite 200b, 200c des zu untersuchenden Profils jeweils drei Wanddrucksensoren in die Profiloberfläche eingebracht, wobei zwei Sensoren parallel zu Anströmung nebeneinander liegen, und hinter einem der beiden nebeneinanderliegenden Sensoren noch ein Dritter in Strömungsrichtung liegt.

Aus der Literatur ist bekannt, dass die energiereichsten Wirbel innerhalb einer turbulenten Grenzschicht meist in direkter Wandnähe zu finden sind. Daher wurde versucht, mit Hilfe eines porösen Körpers, hier des Klettbandes 300, diese Wirbel abzubremsen, abzumildern oder dafür zu sorgen, dass sie ihren Abstand zur Wand vergrößern. Die von ihnen erzeugten Druckschwankungen sind umso schwächer, je größer der Abstand der energiereichen Turbulenzballen zur Wand ist.

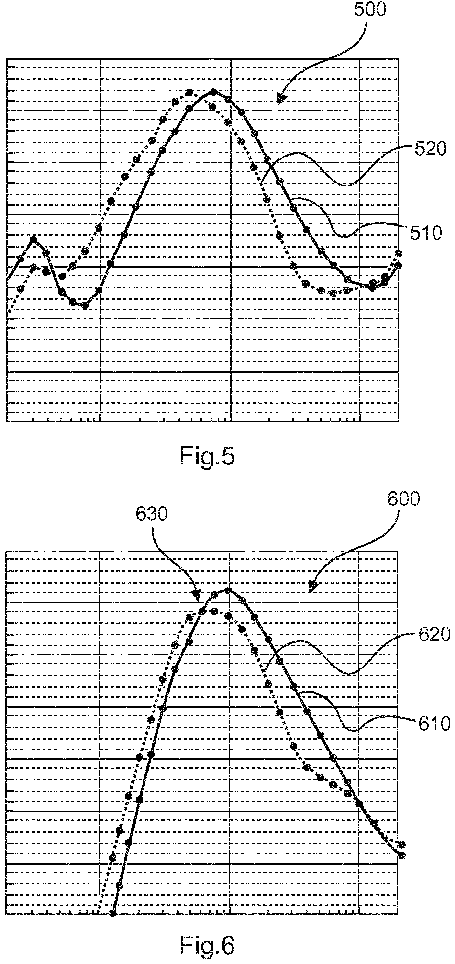

Figur 5 zeigt schematisch und exemplarisch einen Verlauf der Fernfeld-Schalldruckpegel in der Vertikalen über die Frequenzen in der Horizontalen in einem Diagramm 500. Ein Rotorblatt ohne die Anbringung des erfindungsgemäßen Klettbandes zeigt den Schalldruckpegelverlauf 510, während das erfindungsgemäße Rotorblatt 200 den Fernfeld-Schalldruckpegelverlauf 520 zeigt. Die diesem Diagramm zugrundeliegenden Strömungsbedingungen sind beispielsweise saubere Rotorblätter, eine Strömungsgeschwindigkeit von 60 m/s und ein Anstellwinkel von 4°. Durch die Aufbringung des Klettbandes 300 ergibt sich eine Verschiebung des abgeschätzten Fernfeld-Lärms hin zu tieferen Frequenzen. Ein akustischer Vorteil erwächst dadurch, dass eine Schallbewertung zur Berücksichtigung des Frequenzganges des menschlichen Ohrs, eine sogenannte A-Bewertung nach IEC 561, durchgeführt wird.

Figur 6 zeigt schematisch und exemplarisch den Fernfeld-Schalldruckpegel der Figur 5 nach Anwendung der sogenannten A-Bewertung nach IEC 561 in einem Diagramm 600. Auch hier wird der Fernfeld-Schalldruckpegel in der Vertikalen über die Frequenz in der Horizontalen aufgetragen. Ein Verlauf 610 entspricht dem klassischen Rotorblatt, während ein Verlauf 620 den Fernfeld-Schalldruckpegel des erfindungsgemäßen Rotorblattes zeigt. In einem Bereich 630, dem Fernfeld-Schalldruckpegelmaximum beider Rotorblätter, kann gesehen werden, dass das erfindungsgemäße Rotorblatt ein deutlich niedrig liegenderes Maximum zeigt.

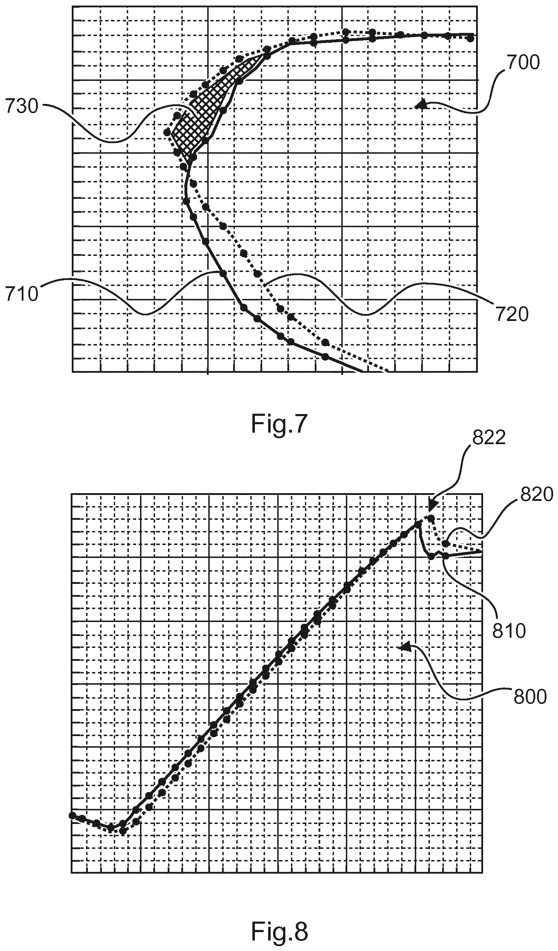

Figur 7 zeigt schematisch und exemplarisch die Verbesserung des prognostizierten A-bewerteten Fernfeld-Schalldruckpegels über einen großen Bereich des Auftriebsbeiwertes $c_l$. In dem Diagramm 700 wird das Maximum des Fernfeld-Schalldruckpegels auf der horizontalen Achse aufgetragen und der Auftriebsbeiwert $c_l$ in der Vertikalen. Sobald der Verlauf 720 des erfindungsgemäßen Rotorblattes links von dem Verlauf 710 des klassischen Rotorblattes liegt, ergibt sich eine akustische Verbesserung, die hier mit einem Bereich 730 gekennzeichnet ist. Es kann gesehen werden, dass dies insbesondere bei höheren Auftriebsbeiwerten, insbesondere ab ca. $c_l > 0,85$ nachgewiesen werden kann. Anders ausgedrückt, besonders bei klassischerweise eingesetzten und bevorzugten Auftriebsbeiwerten zeigt die erfindungsgemäße Modifikation durch das Klettband 300 akustische Vorteile.

Detaillierte Untersuchungen konnten zeigen, dass die Verschiebung im Wesentlichen auf eine Reduktion der konvektiven Machzahl $M_{ac}$ und der spanweitigen Kohärenz zurückzuführen ist, während die tieffrequenten Wanddruckfluktuationen, insbesondere mit Frequenzen niedriger als 1000 Hz, sogar noch verstärkt wurden. Die verringerte konvektive Machzahl **M**$_{ac}$ bedeutet auch, dass besonders vorteilhaft zusätzlich Serrations im Bereich der Hinterkante 201 für den Frequenzbereich von 100 bis 1000 Hz kürzer ausgelegt werden können, was vor allem aerodynamisch von Vorteil ist. Diese Verringerung ist auch aufgrund der verringerten Spann- und Stromweitenkohärenz angebracht.

In Versuchen hat sich eine Verbesserung von maximal 1,5 dB(A) für hohe saugseitige Grenzschichtbelastungen gezeigt. Dieser Bereich ist insbesondere für den Teillastbetrieb und vor allem kurz vor Erreichen der Nennleistung der Windenergieanlage 100 ausschlaggebend für die Schallemission.

Zusätzlich zu der Verbesserung der akustischen Eigenschaften wirkt das Rotorblatt 300 auch auftriebssteigernd, insbesondere wenn das Klettband 300 im Blattinnenbereich angebracht ist. Der Verlauf des Auftriebsbeiwertes in der Vertikalen ist über den Anstellwinkel in der Horizontalen in Diagramm 800 in Figur 8 gezeigt. Das klassische Rotorblatt zeigt die Auftriebspolare 810, während das mit dem Klettband 300 modifizierte Rotorblatt die Auftriebspolare 820 zeigt. Es kann gesehen werden, dass ein maximaler Auftrieb 822 für das erfindungsgemäße Rotorblatt 200 erhöht ist. Auch wird der Stall-Winkel, das heißt der sich einsetzende Strömungsabriss, deutlich erhöht. Demnach wird durch das Klettband 300 die Ausdehnung der beginnenden Hinterkantenablösung beschränkt.

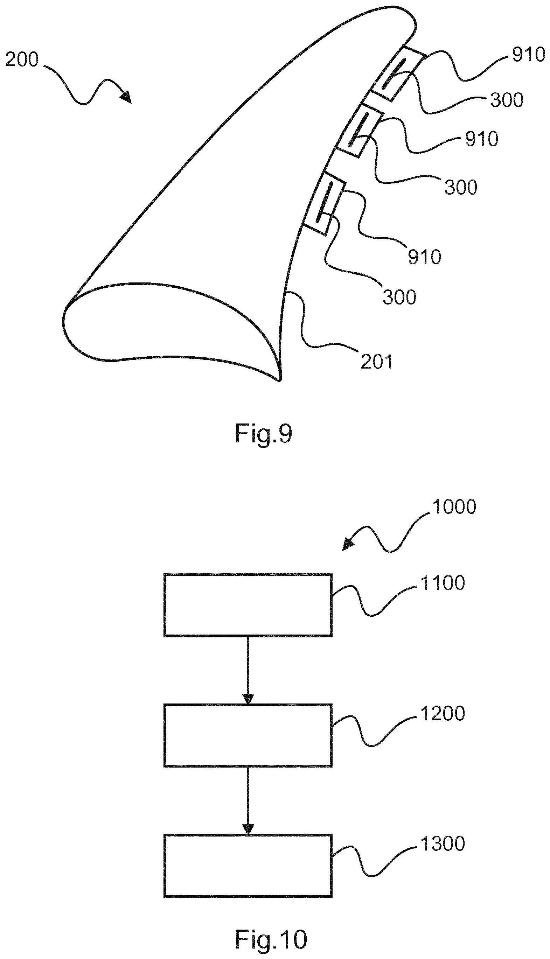

Figur 9 zeigt schematisch und exemplarisch ein Rotorblatt 200, das im Wesentlichen dem Rotorblatt 200, das in Figur 2 gezeigt wurde, entspricht. Zusätzlich weist das Rotorblatt 200 der Figur 9 aerodynamische Anbauteile 910 auf. Bei den aerodynamischen Anbauteilen 910 handelt es sich beispielsweise um Klappen, wie Gurney Flaps oder andere Hinterkantenklappen. Sämtliche weiteren aerodynamischen Anbauteile sind alternativ möglich. Bei den aerodynamischen Anbauteilen 910 kann es sich um aktive genauso wie um passive Anbauteile handeln. In dem Beispiel der Figur 9 ist das Klettband 300 auf den als Klappe gezeigten aerodynamischen Anbauteilen 910 gezeichnet. Es ist genauso möglich, dass das Klettband 300 in der Umgebung der aerodynamischen Anbauteile 910 angeordnet ist, um genauso einen vorteilhaften Effekt auf die Strömung um das aerodynamische Anbauteil 910 zu haben.

Auch wenn in Figur 9 drei aerodynamische Anbauteile 910 gezeigt sind, so kann auch nur eines, zwei oder mehr als drei derartiger Bauteile vorgesehen werden. Auch muss nicht auf jedem der aerodynamischen Anbauteile 910 ein Klettband 300 angeordnet sein, beliebige Kombinationen sind vorstellbar.

Figur 10 zeigt schematisch und exemplarisch ein Flussdiagramm eines Verfahrens 1000 zur Optimierung, insbesondere zur Lärmreduzierung und/oder zur Auftriebssteigerung eines Rotorblattes einer Windenergieanlage 100. Durch das Verfahren 1000 wird die Windenergieanlage 100 optimiert, insbesondere deren erzeugter Lärm reduziert und/oder Auftrieb gesteigert.

Das Verfahren umfasst einen Schritt 1100 des Bereitstellens eines Rotorblattes 200.

In einem weiteren Schritt 1200 wird eine Ausdehnung und Position des Klettbandes 300 unter Berücksichtigung der Geometrie des bereitgestellten Rotorblattes 200 optimiert. Beispielsweise kann dabei auch die Auswahl des Klettbandes 300 unter verfügbaren Klettbändern getroffen werden.

In einem Schritt 1300 wird das Klettband 300 auf einer Oberfläche, insbesondere der Saugseite 200b, des Rotorblattest 200 im Wesentlichen entlang der Längsrichtung des Rotorblattes 200 angebracht. Es sollte beachtet werden, dass in dem Schritt 1200 verschiedene Parameter zum Optimieren zur Anwendung kommen, beispielsweise kann die von dem Rotorblatt erzeugte Lärmemission verringert werden oder auch der aerodynamische Auftrieb gesteigert werden. Je nachdem wird das Klettband 300 anders ausgelegt, insbesondere im Blattspitzenbereich und/oder im Blattwurzelbereich angeordnet.

**Patentansprüche**

1.   Rotorblatt (200) mit

einem Innenblattabschnitt, der sich von einer Rotorblattwurzel (209) in Längsrichtung des Rotorblattes (200) erstreckt und einem an den Innenblattabschnitt anschließenden Außenblattabschnitt, der sich in Längsrichtung bis zu einer Rotorblattspitze (210) erstreckt,
wobei das Rotorblatt (200) eine druckseitige Fläche (200c) und eine saugseitige Fläche (200b) aufweist, die durch eine Vorderkante (202) und eine Hinterkante (201) voneinander getrennt sind,
wobei auf einer Oberfläche des Rotorblattes (200) ein Klettband angeordnet ist, das sich im Wesentlichen entlang der Längsrichtung des Rotorblattes (200) erstreckt, **dadurch gekennzeichnet, dass**
die Hinterkante (210) als stumpfe Hinterkante ausgebildet ist und die Erstreckung des Klettbandes (300) in Längsrichtung des Rotorblattes (200) mindestens 1 m beträgt, das Klettband (300) mehrteilig aus Abschnitten mit jeweils 1 m oder 2,5 m Länge ausgebildet ist und das Klettband (300) in Profiltiefenrichtung eine Breite von etwa 20 mm oder 50 mm aufweist.

2.   Rotorblatt (200) nach Anspruch 1, wobei das Klettband (300) in einem Bereich der Hinterkante des Rotorblattes (200) angeordnet ist, wobei der Bereich der Hinterkante einen Bereich ab 70 % Profiltiefe, insbesondere ab 80 % Profiltiefe, bevorzugt ab 90 % Profiltiefe und besonders bevorzugt ab 95 % Profiltiefe umfasst.

3. Rotorblatt (200) nach einem der vorstehenden Ansprüche, wobei das Klettband (300) auf der saugseitigen und/oder der druckseitigen Fläche des Rotorblattes (200) angeordnet ist.

4. Rotorblatt (200) nach einem der vorstehenden Ansprüche, wobei sich das Klettband (300) auf dem Rotorblatt (200) in einem Bereich von etwa 92 % bis 98 % der Profiltiefe in Längsrichtung des Rotorblattes (200) erstreckt.

5. Rotorblatt (200) nach Anspruch 4, wobei das in Strömungsrichtung vordere Ende des Klettbands (300) auf dem Rotorblatt (200) zwischen 90 % und 98 % Profiltiefe, insbesondere bei etwa 95 % Profiltiefe angeordnet ist.

6. Rotorblatt (200) nach einem der vorstehenden Ansprüche, wobei das Klettband (300) in einem Blattwurzelbereich und/oder einem Blattspitzenbereich angeordnet ist.

7. Rotorblatt (200) nach einem der vorstehenden Ansprüche, wobei das Rotorblatt (200) ein oder mehrere aerodynamische Anbauteile (910), insbesondere Splitter-Plates, Trailing-Edge Serrations, Vortexgeneratoren und Klappen aufweist, wobei das Klettband (300) insbesondere an den oder in der Nähe der aerodynamischen Anbauteile angeordnet ist.

8. Rotorblatt (200) nach mindestens einem der vorherigen Ansprüche, wobei das Klettband (300) entlang einer Vertikalen zur Ebene des Rotorblattes (200), die durch die Längsrichtung des Rotorblattes (200) und die Profiltiefenrichtung gebildet wird, eine mit der Profiltiefe und/oder der Dicke der Grenzschicht an der Position in Längsrichtung skalierende Höhe aufweist.

9. Rotorblatt (200) nach mindestens einem der vorherigen Ansprüche, wobei das Klettband (300) eine Klebebeschichtung umfasst.

10. Windenergieanlage (100), mit einem Turm (102), einer Gondel (104) und einem Rotor (106), wobei der Rotor (106) zumindest ein Rotorblatt (200), insbesondere drei Rotorblätter (200), nach wenigstens einem der Ansprüche 1 bis 9 umfasst.

11. Windpark mit zumindest zwei Windenergieanlagen (100) nach Anspruch 10.

12. Verfahren (1000) zur Optimierung, insbesondere zur Lärmreduzierung und/oder zur Auftriebssteigerung, einer Windenergieanlage (100) umfassend:

Bereitstellen (1100) eines Rotorblattes, wobei das Rotorblatt (200) einen Innenblattabschnitt, der sich von einer Rotorblattwurzel (209) in Längsrichtung des Rotorblattes (200) erstreckt und einen an den Innenblattabschnitt anschließenden Außenblattabschnitt, der sich in Längsrichtung bis zu einer Rotorblattspitze (210) erstreckt, aufweist, wobei das Rotorblatt (200) eine druckseitige Fläche (200c) und eine saugseitige Fläche (200b) aufweist, die durch eine Vorderkante (202) und eine als stumpfe Hinterkante ausgebildete Hinterkante (201) voneinander getrennt sind, und
Anbringen (1300) eines Klettbandes (300) auf einer Oberfläche des Rotorblattes (200) im Wesentlichen entlang der Längsrichtung des Rotorblattes (200),
**dadurch gekennzeichnet, dass** die Erstreckung des angebrachten Klettbandes (300) in Längsrichtung des Rotorblattes (200) mindestens 1 m beträgt, das Klettband (300) mehrteilig aus Abschnitten mit jeweils 1 m oder 2,5 m Länge ausgebildet ist und das Klettband (300) in Profiltiefenrichtung eine Breite von etwa 20 mm oder 50 mm aufweist.

13. Verfahren (1000) nach Anspruch 12, wobei das Anbringen (1300) des Klettbandes auf der saugseitigen Fläche (200b) des Rotorblattes (200) bei etwa 95 % Profiltiefe im Wesentlichen in Längsrichtung des Rotorblattes (200) erfolgt.

14. Verfahren (1000) nach Anspruch 12 oder 13, wobei die Ausdehnung und Position des Klettbandes (300) unter Berücksichtigung der Rotorblattgeometrie optimiert wird (1200).

**Claims**

1.  A rotor blade (200) comprising

    an inner blade section which extends from a rotor blade root (209) in the longitudinal direction of the rotor blade (200), and an outer blade section which adjoins the inner blade section and extends in the longitudinal direction as far as a rotor blade tip (210),
    the rotor blade (200) having a pressure-side surface (200c) and a suction-side surface (200b) which are separated from one another by way of a leading edge (202) and a trailing edge (201),
    a touch-and-close tape being arranged on a surface of the rotor blade (200), which touch-and-close tape extends substantially along the longitudinal direction of the rotor blade (200),
    the trailing edge (201) being configured as a blunt trailing edge, the extent of the touch-and-close tape (300) in the longitudinal direction of the rotor blade (200) being at least 1 m, the touch-and-close tape (300) being configured in multiple pieces from sections with a length in each case of 1 m or 2.5 m and the touch-and-close tape (300) having a width in the profile depth direction of approximately 20 mm or 50 mm.

2.  The rotor blade (200) as claimed in claim 1, the touch-and-close tape (300) being arranged in a region of the trailing edge of the rotor blade (200), the region of the trailing edge comprising a region from a 70% profile depth, in particular from an 80% profile depth, preferably from a 90% profile depth and particularly preferably from a 95% profile depth.

3.  The rotor blade (200) as claimed in either of the preceding claims, the touch-and-close tape (300) being arranged on the suction-side and/or the pressure-side surface of the rotor blade (200).

4.  The rotor blade (200) as claimed in one of the preceding claims, the touch-and-close tape (300) extending on the rotor blade (200) in a region of from approximately 92% to 98% of the profile depth in the longitudinal direction of the rotor blade (200).

5.  The rotor blade (200) as claimed in claim 4, the in the flow direction leading end of the touch-and-close tape (300) being arranged on the rotor blade (200) at between a 90% and 98% profile depth, in particular at an approximately 95% profile depth.

6.  The rotor blade (200) as claimed in one of the preceding claims, the touch-and-close tape (300) being arranged in a blade root region and/or a blade tip region.

7.  The rotor blade (200) as claimed in one of the preceding claims, the rotor blade (200) having one or more aerodynamic attachment parts (910), in particular splitter plates, trailing edge serrations, vortex generators and flaps, the touch-and-close tape (300) being arranged, in particular, on or in the vicinity of the aerodynamic attachment parts.

8.  The rotor blade (200) as claimed in at least one of the preceding claims, the touch-and-close tape (300) having a height which scales with the profile depth and/or the thickness of the boundary layer at the position in the longitudinal direction, along a vertical with respect to that plane of the rotor blade (200) which is formed by way of the longitudinal direction of the rotor blade (200) and the profile depth direction.

9.  The rotor blade (200) as claimed in at least one of the preceding claims, the touch-and-close tape (300) comprising an adhesive coating.

10. A wind turbine (100), with a tower (102), a nacelle (104) and a rotor (106),
    the rotor (106) comprising at least one rotor blade (200), in particular three rotor blades (200), as claimed in at least one of claims 1 to 9.

11. A wind farm with at least two wind turbines (100) as claimed in claim 10.

12. A method (1000) for optimizing, in particular for reducing the noise and/or for increasing the lift, of a wind turbine (100) comprising:

    providing (1100) of a rotor blade, the rotor blade (200) having an inner blade section which extends from a rotor blade root (209) in the longitudinal direction of the rotor blade (200), and an outer blade section which adjoins the inner blade section and extends in the longitudinal direction as far as a rotor blade tip (210), the rotor blade (200) having a pressure-side surface (200c) and a suction-side surface (200b) which are separated from one another by way of a leading edge (202) and a trailing edge (201) being configured as a blunt trailing edge, and attaching (1300) of a touch-and-close tape (300) on a surface of the rotor blade (200) substantially along the longitudinal direction of the rotor blade (200)

**characterized by** the extent of the touch-and-close tape (300) in the longitudinal direction of the rotor blade (200) being at least 1 m, the touch-and-close tape (300) being configured in multiple pieces from sections with a length in each case of 1 m or 2.5 m and the touch-and-close tape (300) having a width in the profile depth direction of approximately 20 mm or 50 mm.

13. The method (1000) as claimed in claim 12, the attaching (1300) of the touch-and-close tape on the suction-side surface (200b) of the rotor blade (200) taking place at an approximately 95% profile depth substantially in the longitudinal direction of the rotor blade (200).

14. The method (1000) as claimed in claim 12 or 13, the extent and position of the touch-and-close tape (300) being optimized (1200) with consideration of the rotor blade geometry.

**Revendications**

1. Pale de rotor (200) avec

   une section de pale intérieure, qui s'étend depuis une racine de pale de rotor (209) dans la direction longitudinale de la pale de rotor (200), et une section de pale extérieure située dans le prolongement de la section de pale intérieure, qui s'étend dans la direction longitudinale jusqu'à une pointe de pale de rotor (210),
   dans laquelle la pale de rotor (200) présente une surface côté pression (200c) et une surface côté aspiration (200b), qui sont séparées l'une de l'autre par un bord d'attaque (202) et un bord de fuite (201),
   dans laquelle est disposée, sur une surface de la pale de rotor (200), une bande Velcro, qui s'étend sensiblement selon la direction longitudinale de la pale de rotor (200), **caractérisée en ce que**
   le bord de fuite (210) est réalisé en tant que bord de fuite émoussé et l'extension de la bande Velcro (300) est d'au moins 1 m dans la direction longitudinale de la pale de rotor (200), la bande Velcro (300) est réalisée en plusieurs parties à partir de sections avec respectivement une longueur de 1 m ou 2,5 m et la bande Velcro (300) présente, dans la direction de la profondeur de profil, une largeur d'environ 20 mm ou 50 mm.

2. Pale de rotor (200) selon la revendication 1, dans laquelle la bande Velcro (300) est disposée dans une zone du bord de fuite de la pale de rotor (200), dans laquelle la zone du bord de fuite comprend une zone à partir de 70 % de la profondeur de profil, en particulier à partir de 80 % de la profondeur de profil, de manière préférée à partir de 90 % de la profondeur de profil, et de manière particulièrement préférée à partir de 95 % de la profondeur de profil.

3. Pale de rotor (200) selon l'une quelconque des revendications précédentes, dans laquelle la bande Velcro (300) est disposée sur la face côté aspiration et/ou la face côté pression de la pale de rotor (200).

4. Pale de rotor (200) selon l'une quelconque des revendications précédentes, dans laquelle la bande Velcro (300) s'étend sur la pale de rotor (200) dans une plage d'environ 92 % à 98 % de la profondeur de profil dans la direction longitudinale de la pale de rotor (200) .

5. Pale de rotor (200) selon la revendication 4, dans laquelle l'extrémité avant dans la direction d'écoulement de la bande Velcro (300) est disposée sur la pale de rotor (200) entre 90 % et 98 % de la profondeur de profil, en particulier à environ 95 % de la profondeur de profil.

6. Pale de rotor (200) selon l'une quelconque des revendications précédentes, dans laquelle la bande Velcro (300) est disposée dans une zone de racine de pale et/ou dans une zone de pointe de pale.

7. Pale de rotor (200) selon l'une quelconque des revendications précédentes, dans laquelle la pale de rotor (200) présente un ou plusieurs composants rapportés (910) aérodynamiques, en particulier des plaques de séparation, des dentelures de bord de fuite, des générateurs de tourbillons et des clapets, dans laquelle la bande Velcro (300) est disposée en particulier sur les composants rapportés aérodynamiques ou à proximité de ceux-ci.

8. Pale de rotor (200) selon au moins l'une quelconque des revendications précédentes, dans laquelle la bande Velcro (300) présente une hauteur modulant dans la direction longitudinale sur la position avec la profondeur de profil et/ou l'épaisseur de la couche limite, le long d'une verticale par rapport au plan de la pale de rotor (200), qui est formée par la direction longitudinale de la pale de rotor (200) et la direction de profondeur de profil.

9. Pale de rotor (200) selon au moins l'une quelconque des revendications précédentes, dans laquelle la bande Velcro (300) comprend un revêtement adhésif.

10. Eolienne (100), avec une tour (102), une nacelle (104) et un rotor (106),
dans laquelle le rotor (106) comprend au moins une pale de rotor (200), en particulier trois pales de rotor (200), selon au moins l'une quelconque des revendications 1 à 9.

11. Parc éolien avec au moins deux éoliennes (100) selon la revendication 10.

12. Procédé (1000) d'optimisation, en particulier de réduction de bruit et/ou d'augmentation de la portance, d'une éolienne (100), comprenant :

la fourniture (1100) d'une pale de rotor, dans lequel la pale de rotor (200) présente une section de pale intérieure, qui s'étend depuis une racine de pale de rotor (209) dans la direction longitudinale de la pale de rotor (200), et une section de pale extérieure située dans le prolongement de la section de pale intérieure, qui s'étend dans la direction longitudinale jusqu'à une pointe de pale de rotor (210), dans lequel la pale de rotor (200) présente une face côté pression (200c) et une face côté aspiration (200b), qui sont séparées l'une de l'autre par un bord d'attaque (202) et un bord de fuite (201) réalisé en tant que bord de fuite émoussé,
et
l'installation (1300) d'une bande Velcro (300) sur une surface de la pale de rotor (200) sensiblement selon la direction longitudinale de la pale de rotor (200),
**caractérisé en ce que** l'extension de la bande Velcro (300) installée dans la direction longitudinale de la pale de rotor (200) est d'au moins 1 m, la bande Velcro (300) est réalisée en plusieurs parties à partir de sections avec respectivement une longueur de 1 m ou de 2,5 m, et la bande Velcro (300) présente, dans la direction de profondeur de profil, une largeur d'environ 20 mm ou de 50 mm.

13. Procédé (1000) selon la revendication 12, dans lequel l'installation (1300) de la bande Velcro sur la face côté aspiration (200b) de la pale de rotor (200) est effectuée à environ 95 % de la profondeur de profil sensiblement dans la direction longitudinale de la pale de rotor (200).

14. Procédé (1000) selon la revendication 12 ou 13, dans lequel l'extension et la position de la bande Velcro (300) sont optimisées en tenant compte de la géométrie de pale de rotor (1200).

Fig.1

Fig.2

200

200b

300  ✕

220

201

200c    Fig.3a

✕:    200b    300

200c    Fig.3b    201

200b    300

201

200c

Fig.4

500

520

510

Fig.5

630

600

620

610

Fig.6

Fig.7

Fig.8

Fig.9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10340978 A1
- DE 102005019905 A1
- DE 102007046253 A1
- DE 102016201114 A1
- US 8899923 B2
- US 20180209398 A1
- WO 2015192915 A1

**In der Beschreibung aufgeführte Nicht-Patentliteratur**

- **AFSHARI et al.** Trailing Edge Noise Reduction Using Novel Surface Treatments. *AIAA/CEAS Aeroacoustic Conference, Lyon,* 2016
- **HERRIG, A.** Validation and Application of a Hot-Wire based Method for Trailing-Edge Noise Measurements on Airfoils. Verlag Dr. Huth, 2012, 132